(19) Europäisches Patentamt

European Patent Office

Office européen des brevets

(11) **EP 1 074 511 B1**

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.$^7$: **C01B 21/36**

(21) Anmeldenummer: **00116234.6**

(22) Anmeldetag: **07.08.2000**

(54) **Verfahren zur Herstellung von Stickstoffdioxid aus Stickstoffmonoxid**

Process for the preparation of nitrogen dioxide from nitrogen monoxide

Procédé pour la production de peroxyde d'azote à partir d'oxyde azotique

(84) Benannte Vertragsstaaten:
**BE DE FR GB NL**

(30) Priorität: **05.08.1999 DE 19936841**

(43) Veröffentlichungstag der Anmeldung:
**07.02.2001 Patentblatt 2001/06**

(73) Patentinhaber: **BASF AKTIENGESELLSCHAFT**
**67056 Ludwigshafen (DE)**

(72) Erfinder:
- **Kiefer, Matthias, Dr.**
  **69226 Nussloch (DE)**
- **Bohner, Gerd**
  **69254 Malsch (DE)**
- **Stegmaier, Wolfgang, Dr.**
  **67434 Neustadt (DE)**
- **Garbe, Gunter**
  **67688 Rodenbach (DE)**

(74) Vertreter: **Isenbruck, Günter, Dr. et al**
**Isenbruck, Bösl, Hörschler, Wichmann, Huhn,**
**Patentanwälte**
**Theodor-Heuss-Anlage 12**
**68165 Mannheim (DE)**

(56) Entgegenhaltungen:
DE-B- 1 200 793     US-A- 3 101 255
US-A- 3 393 047    US-A- 5 264 198

- **PATENT ABSTRACTS OF JAPAN vol. 015, no. 096 (C-0812), 7. März 1991 (1991-03-07) & JP 02 307815 A (UBE IND LTD), 21. Dezember 1990 (1990-12-21)**

**Beschreibung**

Die Erfindung betrifft ein Verfahren zur Herstellung von Stickstoffdioxid ($NO_2$) aus Stickstoffmonoxid (NO).

Stickstoffdioxid ($NO_2$) ist ein Gas mit einem Siedepunkt von 21,2°C. Bei 15°C liegen unter einem Druck von 4 bar $_{abs.}$ 8 % $NO_2$ und 92 % $N_2O_4$ vor, bei gleicher Temperatur und einem Druck von 1 bar $_{abs.}$ 12 % $NO_2$ und 88 % $N_2O_4$. Mit steigender Temperatur zerfällt $N_2O_4$ wieder mehr und mehr zu $NO_2$ gemäß dem folgenden Gleichgewicht I:

$$N_2O_4 \rightleftarrows 2NO_2 \qquad\qquad I$$

Bei etwa 50°C und einem Druck von 1 bar $_{abs.}$ sind ca. 40 % des $N_2O_4$ zerfallen, bei etwa 140°C und 1 bar $_{abs.}$ fast 100 %. Ab 150°C beginnt der Zerfall $NO_2$ zu NO und $O_2$.

Im folgenden soll unter $NO_2$ sowohl $NO_2$ als auch $N_2O_4$ verstanden werden, das im Gleichgewicht mit $NO_2$ vorliegt.

$NO_2$ findet vielfache Verwendung als Oxidations- und Nitrierungsmittel. Des weiteren wird es als Zusatz für Raketentreibstoffe verwendet.

Die großtechnische Gewinnung von $NO_2$ erfolgt üblicherweise nach dem von Ostwald entwickelten Verfahren der katalytischen Ammoniakverbrennung (erste Stufe der Salpetersäure ($HNO_3$)-Herstellung), in dem Ammoniak ($NH_3$) mit Luftsauerstoff bei 800 bis 900°C an Platin- oder Platin/Rhodium-Katalysatoren zu NO umgesetzt wird. Das NO wird mit Luftsauerstoff, üblicherweise in Anwesenheit von verdünnter $HNO_3$ als Absorptionsmittel, zu $NO_2$ oxidiert. Aus der erhaltenen hochkonzentrierten $HNO_3$ kann anschließend durch Fraktionierung reines $NO_2$ gewonnen werden.

Bei diesem Verfahren werden beträchtliche Mengen an Salpetersäure als Nebenprodukt, u.a. durch die Umsetzung von gebildetem $NO_2$ mit im Reaktionsgemisch vorhandenem Wasserdampf, gebildet. Die Menge an gewünschtem $NO_2$ wird somit durch die Bildung von $HNO_3$ verringert. Die als Nebenprodukt gewonnene $HNO_3$ weist üblicherweise eine Konzentration von 15 bis 35 % auf. Aufgrund der niedrigen Konzentration ist sie daher als $HNO_3$ von geringem Wert, wenn sie nicht weiterverarbeitet wird. Des weiteren enthalten die bei Durchführung des Verfahrens entstehenden Abgase beträchtliche Mengen an Stickoxiden ($NO_x$), deren Verwertung von wirtschaftlicher Bedeutung sein kann. Diese Abgase werden daher üblicherweise einer Anlage zur Gewinnung von $HNO_3$ zugeführt. Dieses Verfahren zur Herstellung $NO_2$ ist daher nur in Verbindung mit einer Anlage zur Erzeugung von $HNO_3$ wirtschaftlich.

Aufgrund der großen technischen Bedeutung von $NO_2$ ist es wünschenswert, $NO_2$ unabhängig von der Herstellung von $HNO_3$ in guten Ausbeuten herzustellen. Das hat den Vorteil, daß die Errichtung einer Anlage zur Herstellung von $NO_2$ auch dort wirtschaftlich ist, wo die Errichtung einer Anlage für $HNO_3$ unwirtschaftlich erscheint.

Es sind bereits Verfahren zur Herstellung von $NO_2$ bekannt, die von einer gleichzeitigen $HNO_3$-Herstellung unabhängig sind.

DE-A 1 240 834 und US 3,136,602 betreffen Verfahren zur Herstellung von $NO_2$ aus Gasen der $NH_3$-Verbrennung durch Oxidation des in dem nach der $NH_3$-Verbrennung erhaltenen Gasgemisches aus $N_2$, $O_2$, NO, $NO_2$ und Wasserdampf enthaltenen NO mit $HNO_3$ zu $NO_2$. Das $NO_2$ wird in konzentrierter $HNO_3$ absorbiert und anschließend durch fraktionierte Destillation von $HNO_3$ abgetrennt. Die gesamte im Verlauf des Verfahrens gebildete $HNO_3$ wird wieder in das Verfahren zurückgeführt. Nachteilig bei diesen Verfahren sind die benötigten aufwendigen Apparaturen sowie der Anfall von $NO_x$-haltigen Abgasströmen.

In US 3,393,047 wird ein Verfahren zur Herstellung von $NO_2$ aus trockenem NO durch Oxidation des NO mit $O_2$, wobei $O_2$ im Verhältnis zu NO im Überschuß in den Reaktor eingeführt wird, offenbart. Das Verfahren wird zweistufig durchgeführt. Im ersten Reaktor findet die Oxidation von NO zu $NO_2$ mit einem Überschuß $O_2$ in der Gasphase statt, wobei das $NO_2$ in flüssiger Form gewonnen wird. Der Umsatz im ersten Reaktor liegt in der Größenordnung von 95 bis 96 %. Nicht umgesetztes NO wird zur Nachreaktion unter Zugabe von weiterem $O_2$ in einen zweiten Reaktor überführt und in Anwesenheit eines Katalysators zu $NO_2$ oxidiert.

US 3,101,255 betrifft ein Verfahren zur Herstellung von $N_2O_4$, in dem zunächst Ammoniak mit stöchiometrischen Mengen Sauerstoff zu einem Gasgemisch, enthaltend NO, $N_2$ und Wasserdampf, umgesetzt wird. Nach Extraktion des Wassers aus dem Reaktionsgemisch wird das gewonnene (trockene) NO mit stöchiometrischen Mengen Sauerstoff zu $NO_2$ umgesetzt. Dieses wird im Anschluss an die Reaktion sofort gekühlt, so dass das $NO_2$ in Form von $N_2O_4$ kondensiert und in flüssiger Form entnommen werden kann.

Aufgabe der vorliegenden Erfindung ist die Bereitstellung eines einfachen, von der $HNO_3$-Herstellung unabhängigen großtechnischen Verfahrens zur Herstellung von $NO_2$ und $N_2O_4$, das im Gleichgewicht mit $NO_2$ vorliegt, das sich durch einen im Vergleich zu den bekannten Verfahren reduzierten apparativen Aufwand auszeichnet und die Herstellung von $NO_2$ in sehr hoher Reinheit ermöglicht.

Die Erfindung geht aus von einem Verfahren zur Herstellung von $NO_2$ durch Oxidation von NO mit $O_2$, sowie es im Anspruch 1 beschrieben wird.

Durch das stöchiometrische Verhältnis der Reaktanden, aus denen $NO_2$ in sehr hoher Reinheit hergestellt wird, fallen keine nennenswerten stickoxidhaltigen Abgasströme an. Dabei ist der Anfall von stickoxidhaltigen Abgasströmen umso geringer, je reiner das eingesetzte NO ist. Wird NO eingesetzt, das frei von Verunreinigungen ist, so kann das Verfahren so geführt werden, daß keine stickoxidhaltigen Abgasströme anfallen.

Die Oxidation von NO mit stöchiometrischen Mengen $O_2$ zu $NO_2$ erfolgt in einer schnellen Reaktion, so daß im allgemeinen kein Katalysator eingesetzt wird. Falls Katalysatoren eingesetzt werden, werden im allgemeinen Zeolithe, die gegebenenfalls Übergangsmetall-dotiert sind, oder (saure) Metalloxide eingesetzt. Bevorzugt werden Katalysatoren ausgewählt aus $SiO_2$, $Al_2O_3$, $ZrO_2$, $MgO_2$, $CaO_2$, $BaO_2$, Chromoxiden, $Fe_2O_3$, CuO, MnO und Pd-, Pt-, Mo-, V- und W-haltigen Katalysatoren, eingesetzt.

Aus der Literatur (Ullmann, Band 117, Seite 300, 5. Auflage, 1991) ist bekannt, daß die $NO_2$-Bildungsrate dem Quadrat des Partialdrucks des ersten Edukts NO und linear dem Partialdruck des zweiten Edukts $O_2$ proportional ist. Das bedeutet, daß eine hohe Bildungsrate des Produkts $NO_2$ durch möglichst hohe Partialdrucke der Edukte begünstigt wird. Des weiteren nimmt die Reaktionsgeschwindigkeit der Umsetzung von NO mit $O_2$ mit abnehmender Temperatur zu.

Das erfindungsgemäße Verfahren wird daher im allgemeinen bei einer Temperatur von - 20 bis 100 °C, bevorzugt von 0 bis 60°C, besonders bevorzugt von 10 bis 45 °C und bei einem Druck von im allgemeinen 1 bis 30 bar, bevorzugt von 1 bis 15 bar, besonders bevorzugt von 1 bis 5 bar durchgeführt, wobei das Verhältnis von Temperatur zu Druck so gewählt wird, daß die Oxidation von NO mit $O_2$ in der Gasphase erfolgt und das gebildete $NO_2$ unter den Reaktionsbedingungen kondensiert.

In dem erfindungsgemäßen Verfahren wird ein Umsatz des Edukts NO von bevorzugt ≥ 98 %, besonders bevorzugt von > 99 % erreicht. Die Reinheit des gebildeten Produktes $NO_2$ ist sehr hoch, im allgemeinen > 96 %, bevorzugt > 99 %. Die Reinheit des gebildeten $NO_2$ ist insbesondere dann sehr hoch, wenn sehr reines NO als Ausgangsprodukt eingesetzt wird. Demgemäß wird vorzugsweise NO mit einer Reinheit von > 96 %, ganz besonders bevorzugt von > 99 % eingesetzt. Es kann jedoch auch NO anderer Qualität als Ausgangsprodukt eingesetzt werden. Das erfindungsgemäße Verfahren wird daher bevorzugt einstufig durchgeführt, da eine Nachreaktion in einem zweiten Reaktor nicht erforderlich ist.

In dem Verfahren der Erfindung werden $NO_2$ und $N_2O_4$, das im Gleichgewicht mit $NO_2$ vorliegt in flüssiger Form und gasförmiges $O_2$ in einer Apparatur vorgelegt. Anschließend werden $O_2$ und NO in einem stöchiometrischen Verhältnis zugegeben und reagieren zu $NO_2$. Aufgrund des durch das vorgelegte $O_2$ ständig vorhandenen $O_2$-Überschusses wird so erreicht, daß das Gleichgewicht der Reaktion in Richtung des Produkts $NO_2$ verschoben wird. Dadurch reagiert das gesamte NO zu $NO_2$, so daß das $NO_2$ nicht durch eventuell gelöstes NO verunreinigt ist.

Sowohl die Oxidation von NO mit $O_2$ zu $NO_2$ gemäß Gleichung II

$$2NO + O_2 \rightleftarrows 2NO_2 \qquad\qquad II$$

als auch die Dimerisierung des gebildeten $NO_2$ zu $N_2O_4$ gemäß Gleichung III

$$2NO_2 \rightleftarrows N_2O_4 \qquad\qquad III$$

sind exotherm. Da sich das Gleichgewicht der Oxidationsreaktion mit steigender Temperatur in Richtung der Edukte NO und $O_2$ verschiebt, muß die bei der Oxidation und Dimerisierung freiwerdende Wärme aus dem System abgeführt werden.

Die Abfuhr der Reaktionswärme erfolgt in dem erfindungsgemäßen Verfahren mittels bereits gebildetem, gekühltem $NO_2$ in flüssiger Form als Kühlmedium. Die Kühlung des $NO_2$ kann mit Hilfe eines Kühlmantels und/oder extern über einen Umpumpkreis mit Wärmetauscher erfolgen, durch den das $NO_2$ gepumpt wird. Dabei ist die externe Kühlung über einen Umpumpkreis mit Wärmetauscher bevorzugt. Die bei der Umsetzung entstehende Reaktionswärme wird auf das gekühlte, flüssige $NO_2$ übertragen, das, zusammen mit neu gebildetem $NO_2$, in flüssiger Form aus dem Reaktionsgemisch entfernt wird. Ein Teil des gewonnenen $NO_2$ wird wiederum gekühlt und dem Reaktionsgemisch zugeführt.

Das erfindungsgemäße Verfahren erfolgt somit in einem Zweiphasensystem, in dem die Edukte NO und $O_2$ in gasförmiger Form vorliegen und das Produkt, $NO_2$, in flüssiger Form gewonnen wird und gleichzeitig als Kühlmedium dient.

Das erfindungsgemäße Verfahren kann in allen für diese Umsetzung geeigneten Apparaturen durchgeführt werden. Dabei werden bevorzugt Kolonnen mit oder ohne Einbauten wie Böden, Füllkörpern oder Packungen eingesetzt. Besonders bevorzugt werden Kolonnen ausgewählt aus Blasensäule, gepackter Blasensäule, Bodenkolonne, Schlaufenreaktor, Gegenstromkolonne, Rohrreaktor, Düsenquench und Packungs- oder Füllkörperkolonne eingesetzt. Ganz besonders bevorzugt werden Packungs- oder Füllkörperkolonnen oder Düsenquench eingesetzt. Es ist vorteilhaft, eine möglichst große Oberfläche des gekühlten, flüssigen $NO_2$ zur Abfuhr der Reaktionswärme bereitzustellen.

Die gasförmigen Edukte $O_2$ und NO können entweder im Gleich- oder Gegenstrom zum flüssigen $NO_2$-Strom geführt werden. Bevorzugt werden die gasförmigen Edukte und das flüssige $NO_2$ im Gleichstrom geführt. Die Temperatur in der Säule steigt im allgemeinen vom Kopf der Säule bis zum Boden an. Die Temperaturdifferenz zwischen Kopf und Boden ist dabei abhängig von der Intensität der Kühlung des Reaktionsgemisches. Beispielsweise ist die Temperaturdifferenz bei einer hohen Umlauffrequenz des als Kühlmedium dienenden $NO_2$ durch den in einem externen Umpumpkreislauf vorhandenen Wärmetauscher kleiner als bei einer niedrigen Umlauffrequenz. Da die Löslichkeit von $NO$ in $NO_2$ bei hohen Temperaturen geringer ist als bei niedriger Temperatur, ist es daher vorteilhaft $NO$ und $O_2$ sowie $NO_2$ als Kühlmediuim im Gleichstrom zu führen. Dadurch wird erreicht, daß das im unteren Teil der Kolonne, das heißt im Bereich höherer Temperatur, entnommene $NO_2$ einen möglichst geringen Anteil $NO$ als Verunreinigung enthält.

Das in dem erfindungsgemäßen Verfahren eingesetzte $NO$ wird üblicherweise durch Oxidation von $NH_3$ gewonnen. Die Oxidation erfolgt vorzugsweise katalytisch, nach dem Ostwald-Verfahren. Darin wird Ammoniak mit überschüssiger Luft, gemäß Gleichung IV, bei ca. 600 bis 700°C katalytisch zu $NO$ verbrannt:

$$NH_3 + 5O_2 \rightarrow 4NO + 6H_2O \qquad \text{IV}$$

Als Katalysatoren werden üblicherweise feinmaschige Platin- oder Platin-Rhodium-Netze eingesetzt, durch welche das Ammoniak-Luft-Gemisch mit großer Geschwindigkeit geleitet wird.

Das gewonnene $NO$ wird gegebenenfalls durch Waschen mit wäßrigem Alkali von aciden Gasen befreit und anschließend zur Entfernung von alkalischem Material mit Wasser gewaschen. Die anschließende Trocknung des $NO$ erfolgt z.B. durch Durchleiten des mit Wasserdampf gemischten $NO$ durch ein mit festem Absorptionsmittel gefülltes Bett. Das so erhaltene reine $NO$ wird bevorzugt als Edukt in dem erfindungsgemäßen Verfahren eingesetzt.

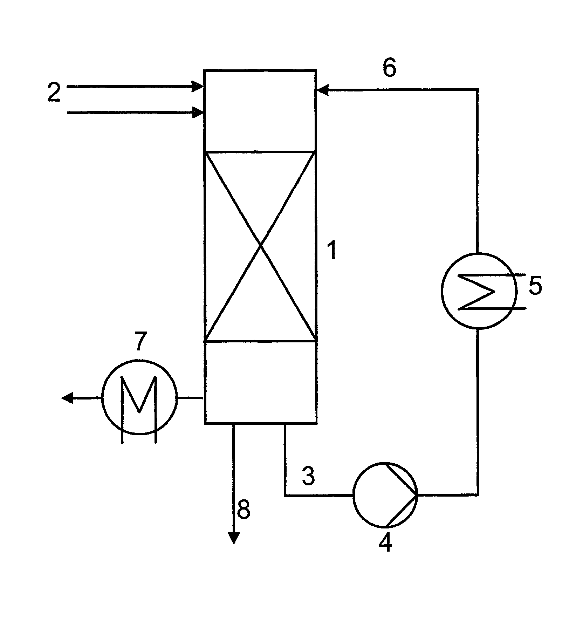

In Fig. 1 ist eine bevorzugt eingesetzte Vorrichtung zur Durchführung des erfindungsgemäßen Verfahrens dargestellt. Darin bedeuten:

1 Kolonne mit Einbauten
2 Zuleitungen für $NO$ und $O_2$
3 Ableitung für flüssiges $NO_2$ in den Umpumpkreis
4 Pumpe
5 Wärmetauscher
6 Zuleitung für gekühltes $NO_2$ aus dem Umpumpkreis
7 Kühler
8 Austrag für $NO_2$

In einer bevorzugten Ausführungsform wird das erfindungsgemäße Verfahren in einer Kolonne **1** durchgeführt. Die Edukte, $NO$ und $O_2$, werden etwa an gleicher Stelle im oberen Teil **2** der Kolonne zugeführt. Gleichzeitig wird bereits gebildetes und gekühltes $NO_2$ an einer Stelle **6** oberhalb oder auf gleicher Höhe der $NO$- und $O_2$-Zufuhr zugegeben. Das gekühlte $NO_2$ wird

bevorzugt im Gleichstrom zu den gasförmigen Edukten geführt und dient dazu, die frei gewordene Reaktionswärme aufzunehmen und aus dem System abzuführen. Das neu gebildete sowie das zur Kühlung eingesetzte $NO_2$ werden im unteren Bereich der Kolonne entnommen. Ein Teil des entnommenen $NO_2$ **3** wird mittels einer Pumpe **4** im Kreis geführt und in einem externen Wärmetauscher **5** gekühlt und in die Kolonne zurückgeführt **6**. Das gewonnene, hochreine $NO_2$ kann entnommen **8** und direkt verwendet werden. Der Umsatz des $NO$ ist nahezu vollständig, so daß nahezu keine stickoxidhaltigen Abgase erhalten werden. Eventuell vorhandene Abgase werden über einen Kühler **7**, der gegebenenfalls gleichzeitig ausgeschleustes $NO_2$ kondensiert und so zurückführt, ausgeschleust.

### Beispiele

a) *Beschreibung der Anlage*

Die Miniplant besteht aus einem Rohrreaktor DN 25 X 1500, bei dem am Reaktorkopf die gasförmigen Edukte Stickoxid, Sauerstoff und gegebenenfalls Stickstoff (als Inertgas bzw. zum Spülen) eingespeist werden. Die Dosierung der Gase erfolgt über thermische Massendurchflußmesser (Fa. Brooks). Über ein Druckhaltventil wird der Druck im Reaktor gesteuert. Der Reaktor ist über einen Doppelmantel temperiert (gekühlt) und mit einer Sulzer DX-Packung gefüllt. Unter den Reaktionsbedingungen kondensiert das gebildete Stickstoffdioxid aus und sammelt sich im Boden des Reaktors an. Über eine Zahnradpumpe wird dieses flüssige Produkt über ein gekühltes Doppelmantelrohr und einen Wärmetauscher zum Kopf des Reaktors zurückgeführt. Somit dient das kondensierte Stickstoffdioxid gleichzeitig als Kühlmedium. Das flüssige Produkt wird standgeregelt (Differenzdruckmessung) über ein Regelventil aus der Apparatur ausgeschleust und kann mittels Durchflußmesser bilanziert werden. Das Gesamtvolumen des Reaktors einschließlich Kühlkreislauf beträgt 2,3 l, der Hold-up an flüssigem $NO_2$ im Reaktor bei stationärem Betrieb etwa 1,2 kg.

b) *Beispiel und Vergleichsbeispiele*

### Beispiel 1

Bei einem Druck von 3 bar, einer Reaktortemperatur von 12°C und einem Umlauf an flüssigem $NO_2$ von 60 l/h wurden kontinuierlich Stickstoffmonoxid und Sauerstoff im Molverhältnis von 1 : 0,5 gasförmig in den Reaktor geleitet. Die verwendeten Gase hatten Reinheiten von > 99 %. Ohne Anfall von Abgas wurden etwa 500 g/h flüssiges $NO_2$, das ebenfalls eine Reinheit von > 99 % (GC, IR) hatte kontinuierlich aus dem Reaktor ausgeschleust.

**Vergleichsbeispiel 1 (O$_2$-Überschuß)**

wie Beispiel 1, aber Molverhältnis NO : O$_2$ = 1: 0,56. Bei einer produzierten Menge von nur 160 g/h NO$_2$ (der Umlauf betrug nur 40 l/h) führte der nichtverbrauchte Anteil des Sauerstoffs bei geschlossenem Gasaustragsventil zu einem schnellem Druckanstieg. Bei druckkonstantem Betrieb der Anlage wurde der überschüssige Sauerstoff als Abgas frei.

**Vergleichsbeispiel 2 (O$_2$-Unterschuß)**

wie Beispiel 1, aber Molverhältnis NO : O$_2$ = 1 : 0,44. Der Überschuß an NO führte zunächst zu einem Druckabfall in der Apparatur (NO reagierte mit dem in der Gasphase "vorgelegten" überschüssigen Sauerstoff zunächst zu NO$_2$) und dann zu einem Anstieg des NO-Gehalts im flüssigen NO$_2$ (durch physikalische Lösung und Bildung von N$_2$O$_3$) bis über 20 Gew.-% (bestimmt mittels IR).

**Patentansprüche**

1. Verfahren zur Herstellung von NO$_2$ und N$_2$O$_4$, das im Gleichgewicht mit NO$_2$ vorliegt, durch Oxidation von Stickstoffmonoxid mit Sauerstoff, worin NO$_2$ in flüssiger Form und gasförmiges O$_2$ in einer Apparatur vorgelegt werden und anschließend O$_2$ und NO in einem Stöchiometrischen Verhältnis zugegeben werden, wobei Druck und Temperatur so gewählt werden, daß die Oxidation in der Gasphase erfolgt und das gebildete Stickstoffdioxid unter den Reaktionsbedingungen kondensiert und gebildetes Stickstoffdioxid als Kühlmedium zur Abfuhr von Reaktionswärme dient.

2. Verfahren nach Anspruch 1, **dadurch gekennzeichnet, daß** die Oxidation in Abwesenheit von Katalysatoren erfolgt.

3. Verfahren nach Anspruch 1 oder 2, **dadurch gekennzeichnet, daß** die Oxidation bei einer Temperatur von - 20 bis 100 °C und einem Druck von 1 bis 30 bar durchgeführt wird, wobei das Verhältnis von Temperatur zu Druck so gewählt wird, daß die Oxidation in der Gasphase erfolgt und das gebildete Stickstoffdioxid unter den Reaktionsbedingungen kondensiert.

4. Verfahren nach einem der Ansprüche 1 bis 3, **dadurch gekennzeichnet, daß** bei Einsatz von reinem NO keine nennenswerten stickoxidhaltigen Abgasströme anfallen.

5. Verfahren nach einem der Ansprüche 1 bis 4, **dadurch gekennzeichnet, daß** die Oxidation einstufig erfolgt.

6. Verfahren nach einem der Ansprüche 1 bis 5, **dadurch gekennzeichnet, daß** die Oxidation in einer Apparatur ausgewählt aus Blasensäule, gepackter Blasensäule, Bodenkolonne, Schlaufenreaktor, Gegenstromkolonne, Rohrreaktor, Düsenquench und Packungs- oder Füllkörperkolonne durchgeführt wird.

7. Verfahren nach Anspruch 8, **dadurch gekennzeichnet, daß** die Temperatur in der Kolonne vom Kopf bis zum Boden ansteigt.

8. Verfahren nach Anspruch 6 oder 7, **dadurch gekennzeichnet, daß** die gasförmigen Edukte O$_2$ und NO und der flüssige NO$_2$-Strom im Gleichstrom geführt werden.

9. Verfahren nach einem der Ansprüche 1 bis 8, **dadurch gekennzeichnet, daß** das eingesetzte Stickstoffmonoxid durch Oxidation von Ammoniak gewonnen wird.

**Claims**

1. A process for the preparation of NO$_2$ and N$_2$O$_4$ in equilibrium with NO$_2$, by oxidation of nitrogen monoxide with oxygen, in which NO$_2$ in liquid form and gaseous O$_2$ are initially taken in an apparatus and O$_2$ and NO are then added in a stoichiometric ratio, which comprises the pressure and temperature being chosen so that the oxidation takes place in the gas phase and the nitrogen dioxide formed condenses under the reaction conditions and nitrogen dioxide formed serving as the cooling medium for removing heat of reaction.

2. A process as claimed in claim 1, **characterized in that** the oxidation is carried out in the absence of catalysts.

3. A process as claimed in claim 1 or 2, **characterized in that** the oxidation is carried out at from -20 to 100°C and from 1 to 30 bar, the ratio of temperature to pressure being chosen so that the oxidation takes place in the gas phase and the nitrogen dioxide formed condenses under the reaction conditions.

4. A process as claimed in any of claims 1 to 3, **characterized in that** no significant exit gas streams containing oxides of nitrogen are formed when pure NO is used.

5. A process as claimed in any of claims 1 to 4, **characterized in that** the oxidation is effected in one stage.

6. A process as claimed in any of claims 1 to 5, **char-**

**acterized in that** the oxidation is carried out in an apparatus selected from a bubble column, packed bubble column, tray column, loop reactor, countercurrent column, tubular reactor, nozzle quench and column containing stacked or dumped packings.

7. A process as claimed in claim 6, **characterized in that** the temperature in the column increases from the top to the bottom.

8. A process as claimed in claim 6 or 7, **characterized in that** the gaseous starting materials $O_2$ and NO and the liquid $NO_2$ stream are passed cocurrently.

9. A process as claimed in any of claims 1 to 8, **characterized in that** the nitrogen monoxide used is obtained by oxidation of ammonia.

## Revendications

1. Procédé de préparation de $NO_2$ et de $N_2O_4$ qui est en équilibre avec $NO_2$, par oxydation de monoxyde d'azote à l'aide d'oxygène, dans lequel $NO_2$ sous forme liquide et $O_2$ sous forme gazeuse sont disposés dans un appareil et ensuite, $O_2$ et NO sont ajoutés dans un rapport stoechiométrique, la pression et la température étant choisies de telle façon, que l'oxydation s'effectue dans la phase gazeuse et que le dioxyde d'azote formé se condense dans les conditions réactionnelles et constitue un agent de refroidissement pour l'élimination de la chaleur réactionnelle.

2. Procédé selon la revendication 1, **caractérisé en ce que** l'oxydation est effectuée en l'absence de catalyseur.

3. Procédé selon la revendication 1 ou 2, **caractérisé en ce que** l'oxydation est effectuée à une température de -20 à 100°C et à une pression de 1 à 30 bars, le rapport de la température à la pression étant choisi de telle façon, que l'oxydation s'effectue dans la phase gazeuse et que le dioxyde d'azote formé se condense dans les conditions réactionnelles.

4. Procédé selon l'une quelconque des revendications 1 à 3, **caractérisé en ce que** par mise en oeuvre de NO pur, on obtient un effluent gazeux qui ne contient pas de quantité notable d'oxydes d'azote.

5. Procédé selon l'une quelconque des revendications 1 à 4, **caractérisé en ce que** l'oxydation est effectuée en une étape.

6. Procédé selon l'une quelconque des revendications 1 à 5, **caractérisé en ce que** l'oxydation est effectuée dans un appareil choisi parmi une colonne à bulles, une colonne à bulles garnie, une colonne à plateaux, un réacteur à boucle, une colonne à contre-courant, un réacteur tubulaire, un injecteur à buses et une colonne à garnissage ou remplissage.

7. Procédé selon la revendication 6, **caractérisé en ce que** la température dans la colonne augmente en passant de la tête au pied de la colonne.

8. Procédé selon la revendication 6 ou 7, **caractérisé en ce que** les produits de départ gazeux $O_2$ et NO ainsi que le courant de $NO_2$ liquide circulent dans le même sens.

9. Procédé selon l'une quelconque des revendications 1 à 8, **caractérisé en ce que** le monoxyde d'azote utilisé est obtenu par oxydation d'ammoniac.